## Europäisches Patentamt

## European Patent Office

## Office européen des brevets

(11) Veröffentlichungsnummer: **0 216 367**
A2

(12) # EUROPÄISCHE PATENTANMELDUNG

(21) Anmeldenummer: 86113131.6

(22) Anmeldetag: 24.09.86

(51) Int. Cl.⁴: **B 29 C 45/32**
**B 29 C 45/27**

(30) Priorität: 26.09.85 DE 3534254

(43) Veröffentlichungstag der Anmeldung:
01.04.87 Patentblatt 87/14

(84) Benannte Vertragsstaaten:
AT BE CH FR GB IT LI NL SE

(71) Anmelder: Stübbe GmbH
Ismaninger Str. 67a
D-8000 München 80(DE)

(72) Erfinder: Kaaden, Hans-Heinrich
Friedrich-Herschel-Strasse 5
D-8000 München 80(DE)

(74) Vertreter: Schirmer, Siegfried
Osningstrasse 10
D-4800 Bielefeld 1(DE)

(54) **Spritzgiessmaschine zum Herstellen von Kunststoffteilen im Spritzgiess- oder Reaktionsspritzgiessverfahren.**

(57) Die aus dem Hauptpatent 34 28 780 bekannte Spritzgießmaschine desitzt eine mittlere geteilte Formaufspannplatte. Durch Lösen der Schnellspannvorrichtung können die beiden Plattenteils mit je einer Formhälfte seitlich verfahren und dadurch des Schmelzeleitsystem beidseitig zugängig gemacht werden.

Trotz der bei der Aufheizung auftretenden Ausdehnungen des Schmelzeleitsystems wird eine gleichmäßige Abspritzung beider Formen dadurch gewährleistet, daß das Schmelzeleitsystem eine oder mehrere separate Schmelzeleitschiene (n) aufweist, wobei jede Schmelzeleitschiene an ihrer Stirnseite längs zur Fließrichtung der Schmelze fest zwischen der geteilt ausgebildeten Formaufspannplatte eingespannt ist. Die Schmelzeleitschienen können einteilig ausgebildet sein und eine zentrale Schmelzeleitung aufweisen.

EP 0 216 367 A2

Patentanwalt
**Dipl.-Ing. Siegfried Schirmer**
Zugelassener Vertreter
vor dem Europäischen Patentamt

Osningstraße 10
4800 Bielefeld 0216367
Telefon (05 21) 29 57 62
18.09.1986
751/58-95
S/m

Anmelder:
Stübbe GmbH
Ismaninger Straße 67 a
8000 München 80

**Spritzgießmaschine zum Herstellen von Kunststoffteilen
im Spritzgieß- oder Reaktionsspritzgießverfahren**

Die Erfindung betrifft eine Spritzgießmaschine zum
Herstellen von Kunststoffteilen aus Thermoplasten,
Duroplasten und/oder Elastomeren im Spritzgießverfahren oder Reaktionsspritzgießverfahren, mit einer Mehrstationen-Schließeinheit in horizontaler oder vertikaler Bauweise zur Aufnahme mehrerer Formen und mit
einer zugeordneten Spritzeinheit zum gleichzeitigen
Abspritzen der Formen, mit zwei äußeren Formaufspannplatten, von denen die eine in Schließrichtung auf
Führungselementen bewegbar angeordnet und mit einem
zwischen den beiden Formaufspannplatten auf Führungselementen bewegbar angeordneten mittleren Formaufnahmeteil, das mit einem beheizbaren Schmelzeleitsystem mit Angußdüsen versehen und an dem beidseitig
je eine Formhälfte einer Form befestigt ist, wobei
das mittlere Formaufnahmeteil für eine Aufnahme größerer Formhälften als längs zur Schließrichtung geteilte Formaufspannplatte ausgebildet ist, deren beide Teile durch eine Schnellspannvorrichtung zusammengehalten sind und zwischen deren beiden Teilen das
Schmelzeleitsystem angeordnet ist und an der mittleren
Formaufspannplatte gesonderte Fahrzylinder befestigt
sind.

- 2 -

Mit der aus dem Hauptpatent bekannten Spitzgießmaschine können größere Teile, insbesondere Karosserieteile aus Kunststoff im Spritzgießverfahren oder
Reaktionsspritzgießverfahren äußerst wirtschaftlich
hergestellt werden. Durch Lösen der Schnellspannvorrichtung können die beiden Plattenteile der mittleren
geteilten Formaufspannplatte mit je einer Formhälfte
seitlich verfahren werden, wodurch das Schmelzeleitsystem völlig freigelegt und damit beidseitig zugängig
ist.

Beim Zuführen der Schmelze treten in dem beheizten
Schmelzeleitsystem erhebliche Ausdehnungen auf.

Der vorliegenden Erfindung liegt die Aufgabe zugrunde,
bei einer Spritzgießmaschine der aufgezeigten Gattung
das Schmelzeleitsystem so auszubilden, daß trotz der
infolge der Aufheizung auftretenden Ausdehnungen des
Schmelzeleitsystems bei jeder Gestaltung der Formen
eine schnelle und gleichmäßige gleichzeitige Abspritzung beider Formen gewährleistet ist.

Diese Aufgabe wird erfindungsgemäß dadurch gelöst,
daß das Schmelzeleitsystem eine oder mehrere separate Schmelzeleitschiene(n) aufweist, wobei jede
Schmelzeleitschiene an ihrer Stirnseite längs zur
Fließrichtung der Schmelze fest zwischen der geteilt
ausgebildeten Formaufspannplatte eingespannt ist.
Zweckmäßigerweise sind die Schmelzeleitschienen einteilig ausgebildet und weisen eine zentrale Schmelzeleitung auf.

0216367
751/58-95

In Ausgestaltung der Erfindung weist die Schmelzeleitschiene an ihrer Stirnseite beidseitig je einen äußeren Flansch auf, denen jeweils eine in der geteilten Formaufspannplatte lagernde Führungskupplung zugeordnet ist, wobei die Führungskupplungen vorteilhafterweise über die Breite der geteilten Formaufspannplatte verlaufen. Auf der Stirnseite der Schmelzeleitschiene ist vorteilhafterweise zur Aufnahme des jeweiligen Düsensystems ein mittiger Zentrierbund angeordnet und die Schmelzeleitung der Schmelzeleitschiene mit einem aufgeweiteten Schmelzeeintritt versehen, der gerundete Seitenwandungen aufweisen kann.

Weitere zweckmäßige Ausgestaltungen der Zusatzerfindung ergeben sich aus den übrigen Unteransprüchen.

Durch die erfindungsgemäße Ausbildung ist die Möglichkeit gegeben, die zur Zuführung der Schmelze an-geordneten Schmelzeleitschienen des Schmelzeleit-systems an jeder beliebigen Stelle der geteilten Formaufspannplatte anzuordnen, wobei durch die Festlegung der Stirnseite der Schmelzeleitschiene eine einseitige Ausdehnung vorgegeben ist. Hierbei ist durch die erfindungsgemäße Ausbildung sichergestellt, daß die Druckplatte mit ihrer Außenseite gleitbar an der Düsenanlagefläche geführt ist, so daß die Düsenanlagefläche der Angußdüsen und die Bohrungen der Druckplatte jeweils zentrisch zueinander gelagert sind. Eine Ausdehnung der Schmelzeleitschiene von der geteilten Formaufspannplatte weg
ist durch das jeweils aufgesetzte Düsensystem auf
den Schmelzeeintritt nicht gegeben.

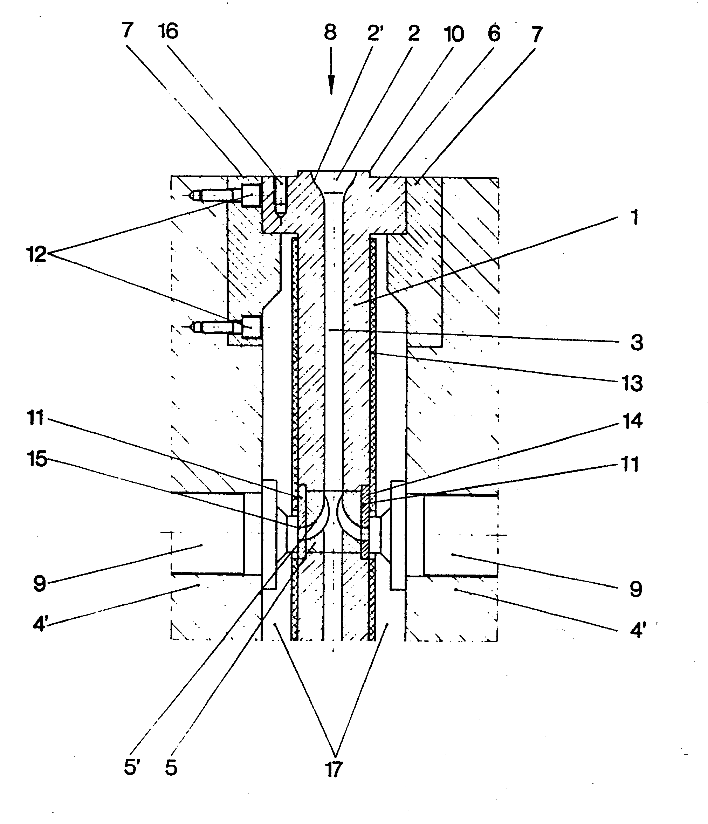

Ein Ausführungsbeispiel der Erfindung ist in der
Zeichnung dargestellt und wird im folgenden näher
erläutert. Die einzige Figur zeigt einen Vertikalschnitt durch einen Teil einer Schmelzeleitschiene.

Die dargestellte Schmelzeleitschiene 1 besitzt eine
zentrale Schmelzeleitung 3 und ist einteilig ausgebildet. An der Stirnseite besitzt die Schmelzeleitschiene 1 beidseitig je einen äußeren Flansch 6,
denen jeweils eine in der geteilten mittleren Formaufspannplatte 4' lagernde Führungskupplung 7 zugeordnet ist, wobei die äußeren Begrenzungen der Flansche 6 annähernd in einer Flucht mit den inneren
Begrenzungen der geteilten mittleren Formaufspannplatte 4' liegen. Durch diese Ausbildung ergibt sich
der aus der Figur ersichtliche Zwischenraum 17 zwischen der Formaufspannplatte 4' und der Schmelzeleitschiene 1. Da die Schmelzeleitschiene 1 an ihrer
Stirnseite mit den Flanschen 6 über die Führungskupplungen 7 fest zwischen der mittleren Formaufspannplatte 4' eingespannt ist, ergibt sich ein Festpunkt, von dem aus sich die Schmelzeleitschiene 1
nur einseitig infolge der Aufheizung ausdehnen kann.
Zur Erreichung dieser einseitigen Ausdehnung trägt auch
bei, daß die Schmelzeleitschiene 1 mit ihrer Stirnseite
fest an das jeweilige Düsensystem angeschlossen ist und dadurch eine Ausdehnung der Schmelzeleitschiene 1 entgegengesetzt zur Formaufspannplatte ausgeschlossen ist.

Die Schmelzeleitschiene 1 mit ihren gegenüberliegenden Schmelzeverteilern 5 ist so dimensioniert, daß unter Berücksichtigung der zu erwartenden Ausdehnungen infolge der Aufheizung im Betriebszustand gewährleistet ist, daß die Düsenanlageflächen 14 der Angußdüsen 9 und die Bohrung 15 der auf der Außenseite der Schmelzeverteiler 5 angeordneten Druckplatten 11 jeweils zentrisch zueinander gelagert sind und zwar auch dann, wenn mehrere Schmelzeverteilerpaare 5 übereinander angeordnet sind. Die Angußdüsen 9 sind mit ihrer Düsenanlagefläche 14 dicht an die Druckplatten 11 der Schmelzeverteiler 5 anpreßbar.

Hierbei liegen die Druckplatten 11 bündig mit der Außenseite der Schmelzeleitschiene 1. Die in jeder Druckplatte 11 vorhandene Bohrung 15 besitzt einen Durchmesser, der dem Enddurchmesser der im Schmelzeverteiler 5 vorhandenen Schmelzezuführung 5' entspricht. Diese Schmelzezuführung 5' ist in Fließrichtung bogenförmig ausgebildet, wodurch ein reibungsarmer und fließgünstiger Verlauf der Schmelze erreicht wird.

Die Führungskupplungen 7 verlaufen über die Breite der geteilten Formaufspannplatte 4' und sind mittels Schrauben 12 mit der Formaufspannplatte 4' verbunden.

Dadurch ist eine Kupplungsposition der einzelnen Schmelzeleitschienen 1 an jeder beliebigen Stelle innerhalb der Formaufspannplatte 4' möglich.

Zur Aufnahme des jeweiligen Düsensystems ist auf der Stirnseite jeder Schmelzeleitschiene 1 ein mittiger Zentrierbund 10 angeordnet. Die Schmelzeleitung 3 der Schmelzeleitschiene 1 weist einen aufgeweiteten Schmelzeeintritt 2 auf, dessen Seitenwandungen 2' gerundet verlaufen. In diesen aufgeweiteten Schmelzeeintritt 2 wird das Düsensystem eingefahren. Mit 16 ist eine Gewindebohrung auf der Stirnseite der Schmelzeleitschiene 1 bezeichnet, die zur Herstellung einer Verbindung mit dem Düsensystem dient.

Auf den Außenflächen der Schmelzeleitschiene 1 ist ein Heizband 13 angeordnet, das separat beheizbar und separat auf die jeweilige Betriebstemperatur regelbar ist. Im Bereich der Düsenanlageflächen 14 ist das Heizband 13 zur Gewährleistung einer einwandfreien vertikalen Bewegung der Schmelzeleitschiene 1 unterbrochen. Bei der Ausdehnung der Schmelzeleitschiene 1 gleiten die Druckplatten 11 mit ihrer Außenseite an den Düsenanlageflächen 14. Der Pfeil 8 gibt die Fließrichtung der Schmelze an.

Das auf den Schmelzeeintritt jeweils aufgesetzte Düsensystem, das zweckmäßigerweise über eine Schnellspannvorrichtung auf der geteilten mittleren Formaufspannplatte 4' befestigt und verriegelt ist,
bleibt in jedem Betriebszustand mit der Formaufspannplatte 4' fest verbunden und verhindert eine
Ausdehnung des Schmelzeleitkanals 1 entgegengesetzt
zur Formaufspannplatte 4'.

- Patentansprüche -

- 8 -

Aufstellung der Bezugszeichen:

| | |
|---|---|
| 1 | Schmelzeleitschiene |
| 2 | Schmelzeeintritt |
| 2' | Seitenwandungen von 2 |
| 3 | Schmelzeleitung |
| 4' | mittlere geteilte Formaufspannplatte |
| 5 | Schmelzeverteiler |
| 5' | Schmelzezuführung in 5 |
| 6 | oberer Flansch von 1 |
| 7 | Führungskupplung |
| 8 | Fließrichtung |
| 9 | Angußdüsen |
| 10 | Zentrierbund von 6 |
| 11 | Druckplatten |
| 12 | Schrauben |
| 13 | Heizband |
| 14 | Anlagefläche von 9 |
| 15 | Bohrung in 1 |
| 16 | Gewindebohrung zur Aufnahme des Düsensystems |
| 17 | Zwischenraum zwischen 4' u. 1 |

Patentanwalt
**Dipl.-Ing. Siegfried Schirmer**
Zugelassener Vertreter
vor dem Europäischen Patentamt

- 8 -

Osningstraße 10
4800 Bielefeld 1
Telefon (05 21) 29 57 62

0216367

18.09.1986
751/58-95
S/m

Anmelder:
Stübbe GmbH
Ismaninger Straße 67 a
8000 München 80

Patentansprüche:

1. Spritzgießmaschine zum Herstellen von Kunststoffteilen aus Thermoplasten, Duroplasten und/oder Elastomeren im Spritzgießverfahren oder Reaktionsspritzgießverfahren, mit einer Mehrstationen-Schließeinheit in horizontaler oder vertikaler Bauweise zur Aufnahme mehrerer Formen und mit einer zugeordneten Spritzeinheit zum gleichzeitigen Abspritzen der Formen, mit zwei äußeren Formaufspannplatten, von denen die eine in Schließrichtung auf Führungselementen bewegbar angeordnet und mit einem zwischen den beiden Formaufspannplatten auf Führungselementen bewegbar angeordneten mittleren Formaufnahmeteil, das mit einem beheizbaren Schmelzeleitsystem mit Angußdüsen versehen und an dem beidseitig je eine Formhälfte einer Form befestigt ist, wobei das mittlere Formaufnahmeteil für eine Aufnahme größerer Formhälften als längs zur Schließrichtung geteilte Formaufspannplatte ausgebildet ist, deren beide Teile durch eine Schnellspannvorrichtung zusammengehalten sind und zwischen deren beiden Teilen das Schmelzeleitsystem angeordnet ist und an der mittleren Formaufspannplatte gesonderte Fahrzylinder befestigt sind, dadurch gekennzeichnet, daß das Schmelzeleitsystem eine oder mehrere separate Schmelzeleitschiene(n) (1) aufweist, wobei jede Schmelzeleitschiene (1) an ihrer Stirnseite längs zur Fließrichtung der Schmelze fest zwischen der geteilt ausgebildeten Formaufspannplatte (4') eingespannt ist.

2. Spritzgießmaschine nach Anspruch 1, dadurch gekennzeichnet, daß die Schmelzeleitschienen (1) einteilig ausgebildet sind.

3. Spritzgießmaschine nach Anspruch 1 oder 2, dadurch gekennzeichnet, daß die Schmelzeleitschienen (1) jeweils eine zentrale Schmelzeleitung (3) aufweisen.

4. Spritzgießmaschine nach einem der Ansprüche 1 bis 3, dadurch gekennzeichnet, daß in der Schmelzeleitschiene (1) gegenüberliegende Schmelzeverteiler (5) angeordnet sind.

5. Spritzgießmaschine nach Anspruch 4, dadurch gekennzeichnet, daß zwei oder mehr Schmelzeverteilerpaare (5) angeordnet sind.

6. Spritzgießmaschine nach einem der Ansprüche 1 bis 5, dadurch gekennzeichnet, daß die Schmelzeleitschiene (1) an ihrer Stirnseite beidseitig je einen äußeren Flansch (6) aufweist, denen jeweils eine in der geteilten Formaufspannplatte (4') lagernde Führungskupplung (7) zugeordnet ist.

7. Spritzgießmaschine nach Anspruch 6, dadurch gekennzeichnet, daß die Führungskupplungen (7) über die Breite der geteilten Formaufspannplatte (4') verlaufen und mit der geteilten Formaufspannplatte (4') verbunden sind.

8. Spritzgießmaschine nach Anspruch 6 oder 7, dadurch gekennzeichnet, daß die äußeren Begrenzungen der Flansche (6) annähernd in einer Flucht mit den inneren Begrenzungen der geteilten Formaufspannplatte (4') liegen.

9. Spritzgießmaschine nach einem der Ansprüche 1 bis 8, dadurch gekennzeichnet, daß zur Aufnahme des jeweiligen Düsensystems auf der Stirnseite der Schmelzeleitschiene (1) ein mittiger Zentrierbund (10) angeordnet ist.

10. Spritzgießmaschine nach einem der Ansprüche 1 bis 9, dadurch gekennzeichnet, daß die Schmelzeleitung (3) der Schmelzeleitschiene (1) einen aufgeweiteten Schmelzeeintritt (2) aufweist.

11. Spritzgießmaschine nach Anspruch 10, dadurch gekennzeichnet, daß der Schmelzeeintritt (2) gerundete Seitenwandungen (2') aufweist.

12. Spritzgießmaschine nach einem der Ansprüche 1 bis 11, dadurch gekennzeichnet, daß auf der Stirnseite der Schmelzeleitschiene (1) Gewindebohrungen (16) zur Herstellung einer Verbindung mit dem Düsensystem angeordnet sind.

13. Spritzgießmaschine nach einem der Ansprüche 1 bis 12, dadurch gekennzeichnet, daß jede Schmelzeleitschiene (1) an der Stirnseite fest an das Düsensystem anschließbar ist.

14. Spritzgießmaschine nach einem der Ansprüche 1 bis 13, dadurch gekennzeichnet, daß das Düsensystem über eine Schnellspannvorrichtung auf der geteilten Formaufspannplatte (4') befestigt und verriegelt ist.

15. Spritzgießmaschine nach einem der Ansprüche 1 bis 14, dadurch gekennzeichnet, daß auf den Außenflächen jeder Schmelzeleitschiene (1) ein Heizband (13) angeordnet ist.

16. Spritzgießmaschine nach Anspruch 15, dadurch gekennzeichnet, daß jedes Heizband (13) separat beheizbar und separat auf die jeweilige Betriebstemperatur regelbar ist.

17. Spritzgießmaschine nach einem der Ansprüche 1 bis 16, dadurch gekennzeichnet, daß in den Schmelzeverteilern (5) je eine in Fließrichtung zu den Angußdüsen (9) hinführende bogenförmige Schmelzezuführung (5') angeordnet ist.

18. Spritzgießmaschine nach einem der Ansprüche 1 bis 17, dadurch gekennzeichnet, daß auf der Außenseite der Schmelzeverteiler (5) je eine Druckplatte (11) angeordnet ist.

19. Spritzgießmaschine nach Anspruch 18, dadurch gekennzeichnet, daß die Druckplatte (11) bündig mit der Außenseite der Schmelzeleitschiene (1) verläuft.

20. Spritzgießmaschine nach Anspruch 18 und 19, dadurch gekennzeichnet, daß in der Druckplatte (11) eine Bohrung (15) angeordnet ist, deren Durchmesser dem Enddurchmesser der gebogenen Schmelzezuführung (5') des Schmelzeverteilers (5) entspricht.

21. Spritzgießmaschine nach einem der Ansprüche 1 bis 20, dadurch gekennzeichnet, daß an die Druckplatten (11) der Schmelzeverteiler (5) die Angußdüsen (9) mit der Düsenanlagefläche (14) dicht anpreßbar sind.

22. Spritzgießmaschine nach einem der Ansprüche 1 bis 21, dadurch gekennzeichnet, daß das Heizband (13) im Bereich der Düsenanlageflächen (14) unterbrochen ist.

23. Spritzgießmaschine nach einem der Ansprüche 1 bis 22, dadurch gekennzeichnet, daß die Druckplatte (11) mit ihrer Außenseite gleitbar an der Düsenanlagefläche (14) geführt ist.

24. Spritzgießmaschine nach einem der Ansprüche 1 bis 23, dadurch gekennzeichnet, daß an den inneren Seitenwandungen der geteilten Formaufspannplatte (4') Führungen angeordnet sind, in denen die Schmelzeleitschiene (1) vertikal führbar ist.

25. Spritzgießmaschine nach einem der Ansprüche 1
    bis 24, dadurch gekennzeichnet, daß jeder Schmelzeleitschiene (1) eine gesonderte Schneckeneinheit
    zugeordnet ist.

0216367